# EUROPEAN PATENT APPLICATION

(11) **EP 1 405 837 A1**
(43) Date of publication of application: **07.04.2004**
(21) Application number: 03256204.3
(22) Date of filing: 01.10.2003
(51) Int. Cl.: C04B 35/573, C04B 35/80

(54) **A method for processing silicon-carbide materials using organic film formers**

(30) Priority: 04.10.2002 US 263724
(71) Applicant: GENERAL ELECTRIC COMPANY, Schenectady, NY 12345 (US)
(72) Inventor: Gray, Paul, North East, Maryland 21901 (US); Landini, Dennis, Newark, Delaware 19713 (US); Matsumoto, Roger Lee Ken, Newark, Delaware 19711 (US)
(74) Representative: Pedder, James Cuthbert

(57) **Abstract**

A method of processing a porous ceramic preform is disclosed comprising: partially infiltrating (16) interconnected pores of a ceramic preform with an organic fluid (18), converting (34) the organic fluid on pore surfaces of the preform to a carbon film, and injecting silicon (38) into the pores with the carbon film of the preform.

## Description

This invention relates to techniques for producing microporous carbon from the porous solid polymer.

Conventional CVI-resin-melt inflation (CRMs) processes may be formed from melt infiltrated silicon carbide (SiC) materials and SiC-CMCs silicon-carbide ceramic-matrix composites (SiC CMCs). CVI stands for chemical vapor infiltration. Conventional techniques for making CRM materials include impregnating thermosetting resins into the pores of SiC and SiC-CMC materials, such as is disclosed in U.S. Patent No. 5,865,922. The thermosetting resin flow into the pores of the SiC and SiC-CMC materials and coat the walls of the pores. Thermosetting resins provide a source of carbon for subsequent melt infiltration into the surfaces of the pores of the SiC and SiC-CMC materials.

Thermosetting resins are problematic because they often contain glycol pore formers that render the carbon char, e.g., unburnt carbon, open and accessible to subsequent processing steps to form the SiC or SiC CMS material. The carbon char coats the pore walls of the material by the flow of resin through the pores. It is preferable that the carbon char be converted to SiC. Because of its exposed condition, the carbon char will convert to SiC by the molten silicon that is used in subsequently processing steps.

Moreover, the thermosetting resins conventionally used for SiC and SiC-CMC materials tend to be flammable and toxic. Because of the hazards of these resins, the impregnation process conventionally requires hazardous material handling procedures and any discarded resin must be disposed in a safe matter. Further, the resins typically require impregnating and pressure curing to assure complete filling of the internal void space within the porous preform prior to conversion to carbon char in a pyrolysis furnace.

In a one embodiment the invention is a method of processing a porous ceramic preform is disclosed comprising: partially infiltrating interconnected pores of a ceramic preform with an organic fluid, converting the organic fluid on pore surfaces of preform to a carbon film, and injecting silicon into the pores with the carbon film of the preform.

The embodiment of the invention makes use of non-toxic sources of carbon such as sugars in low viscosity solutions or catalyzed, low viscosity resin solutions such as polyester catalyzed with methyl ethyl ketone peroxide to provide a complete organic film coating of the pore surfaces, without having to necessarily resort to pressure curing as had been done to impregnate conventional thermosetting resins into the pores of the preform.

The invention will now be described in greater detail, by way of example, with reference to the drawings, in which:-
FIGURE 1 is a flow chart of the processing steps for a CMC preform.
FIGURE 2 is a schematic diagram of an impregnation, vacuum and heating system.

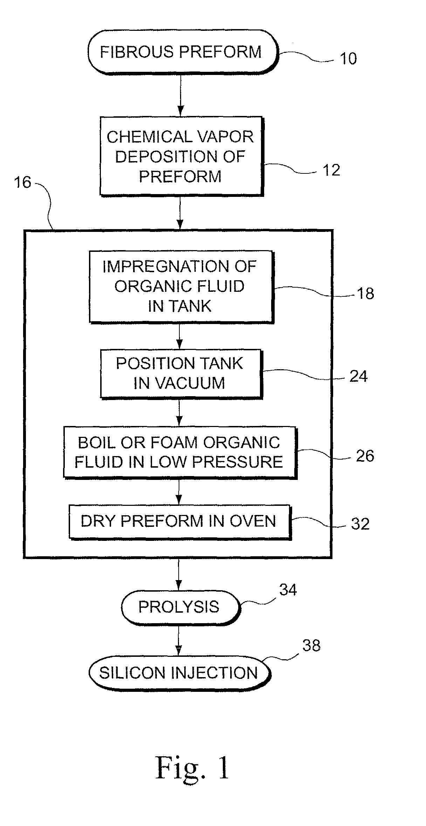

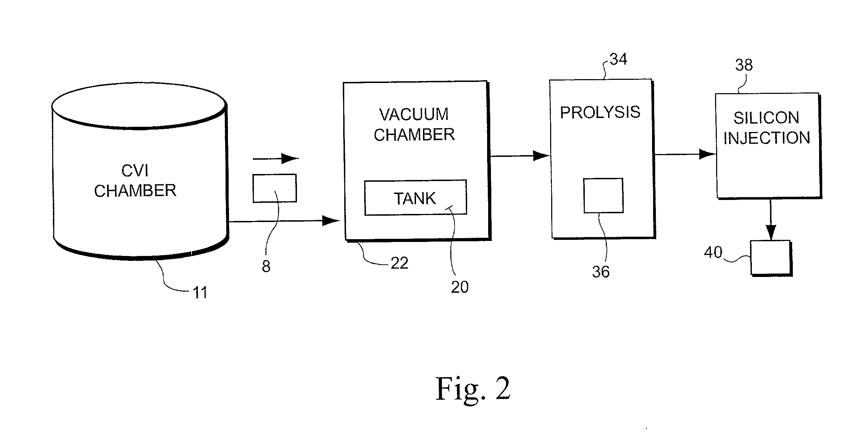

FIGURE 1 is a flow chart showing exemplary process steps for forming a silicon carbide (SiC) refractory preform material, such as a matrix of a fiber reinforced ceramic-matrix composite material. Figure 2 shows schematically a system for chemical vapor infiltration of a fibrous preform, impregnation of the CVI treated ceramic-fibrous preform in a vacuum chamber, and heating system.

A preform 10 is a matrix of fibers having a relatively porous structure and is processed using the system shown herein. At the end of the process, the preform is the final CMC product. It may undergo subsequent fabrication steps before the preform becomes a final product ready for delivery to a customer or used in a larger product. The preform may be a porous fibrous product shaped as a gas turbine shroud, combustion liner or turbine blade. The preform may be formed into a variety of components and replacement components. One potential application is to fabricate components from the preform for a Brayton or Stirling cycle engine, which components are conventional made from high temperature cobalt- or nickel-containing alloys.

The fiber preform may include unidirectional fibers, two-dimensional (2-D) woven fiber tows, or three-dimensional (3-D) woven or braided fiber tows. The fiber preform is positioned in a chamber 11 for chemical vapor infiltration (CVI). The preform is partially densified by the CVI process, in step 12, with a suitable ceramic material to yield a rigid body preform having a relatively large volume fraction of interconnected pores. The material use for CV infiltration may be SiC, Si₃N₄, refractory disilicide or another suitable infiltration material.

The CVI process coats the fibers of the preform with a generally uniform coating of ceramic material. The ceramic coating of the fibers provides rigidity to the preform and shield the fibers from damage during subsequent processing steps. Within the fibrous preform 10 (and before CVI), the porosity of the preform may be in a range of 10 percent of the preform volume to 45 percent by volume. After CVI 12, the preform is somewhat denser as it has been transformed into a SiC/SiC material, such as a fiber ceramic composite matrix (CMC)material.

The CVI process is performed for a length of time to partially densify the CMC. Typically the CVI process is carried out until 8-45 volume percent porosity remains in the CMC. Preferably, the CVI is performed until 10-20 percent porosity remains. Further reductions in the porosity of the perform require exponentially longer CVI process times. The Melt Infiltration process is meant to supplement the CVI matrix with a dense mixture of Si and SiC. The CVI process time is determined by comparing the rate of weight gain within the part to the cost of operating the furnace. The partial CVI treatment protects the fibers in the preform during subsequent processing steps.

After partial CVI 12, the SiC/SiC preform 14 is impregnated with carbon, in step 16. Impregnating the SiC/SiC preform 14 with carbon provides good mechanical properties for the SiC and SiC-CMC materials of the preform. The source of the carbon to be applied to the preform is an organic fluid mixture 18 that flows into the pores as the preform is immersed into a tank 20 of the fluid mixture 18.

The organic fluid mixture 18 coats the pore surfaces of the preform so as to apply a source of carbon to the pore surfaces. As the mixture 18 is removed, an organic film coats the pore surfaces of the preform. This organic film is later converted to a carbon film by pyrolysis. Due to its relative low viscosities, the organic fluid mixture may not fill large pores.

The organic solution need only partially fill the pores, unlike conventional impregnation techniques which completely filled the pores in the preform with a resin. In the present impregnation process, the organic solution need only wet the interior porosity of the preform to apply a thin film of the solution to the pore surfaces. The organic film dries on the pore surfaces of the preform. The dried film is subsequently converted to a carbon char coating on the pore surfaces. The carbon in the char coating greatly increases the wettability of the interior CMC pore surfaces.

The organic fluid mixture 18 may be a low viscosity organic liquid mixture that impregnates the porous matrix of the preform. The organic liquid mixture may be, for example, liquid corn syrup, molasses or sugar (sucrose) solution or a room temperature curing resin such as polyester. Dilute solutions of submicron carbon particulates such as carbon black or lampblack dispersed in water have also been found to be effective interior surface wetting agents to molten silicon. These organic liquid mixtures are generally commercially available products. The use of the organic fluid mixture 18 avoids the need for a thermosetting step that was conventionally required for the thermosetting resins.

The porous SiC/SiC CMC preform has a porosity in a range of 10 percent to 45 percent. To impregnate the pores, the preform is immersed in a tank 20 of the organic fluid mixture, in step 18. The tank with the preform is positioned in a vacuum chamber 22, in step 24. The chamber is evacuated until the pressure level in the chamber is sufficiently low that the organic liquid boils or foams, in step 26. After the organic liquid has boiled or foam for 0.5 to 25 minutes, the vacuum is released and the preform is withdrawn from the pool of organic liquid.

After being removed from the pool of organic liquid, the preform is placed in a heated oven 28 until water in the pores of the preform 30 is removed, in step 32. The oven heating step may be omitted if a polyester resin is used as the organic liquid.

After the liquid evaporates from the pores, an organic coating remains on the surfaces of the pores of the preform material as a residual of the liquid organic fluid. The impregnated CMC preform is subjected to a pyrolysis cycle, in step 34. During pyrolysis, heat is applied to the preform 36 such that the organic coating is chemically changed to a carbon coating, e.g., carbon char, on the pore surfaces of the preform. The carbon coating strengthens the fiber-ceramic matrix of the preform.

By virtue of the coating of the organic liquid, a film of carbon remains on the pore walls after the pyrolysis step. The CMC preform material 36, with the carbon coating on its pore walls, is impregnated with molten silicon, in step 38. The silicon substantially fills the pores of the preform. When the silicon cures and solidifies, the densification process of the preform is completed.

The final preform 40 is a dense CMC matrix comprising silicon carbide and some free silicon. The porosity of the completed SiC CMC matrix is substantially less than 10 to 45 percent of the preform prior to silicon injection.

The process disclosed here can be used to densify preforms made by a CVI process, and preforms formed by other ceramic processing methods that produce a porous ceramic or ceramic matrix composite. The method disclosed here may also be used to form ceramic bodies or composite bodies made by reaction-bonded silicon nitride, by ceramic polymer precursors, or made by other processes that produce a material that is porous may be densified by the reaction forming process disciosed here.

## Claims

1. A method of processing a porous ceramic preform (8) comprising:
partially infiltrating (16) interconnected pores of a ceramic preform with an organic fluid (18),
converting (34) the organic fluid on pore surfaces of preform to a carbon film, and
injecting silicon (38) into the pores with the carbon film of the preform.

2. A method a porous ceramic preform as in claim 1 wherein the organic fluid is in a pool (20) and the preform is placed in the pool of organic fluid.

3. A method as in claim 1 or 2 further comprising subjecting the preform to a vacuum while the organic fluid is infiltrating the preform, wherein the fluid boils or foams (32) in said vacuum.

4. A method as in claim 1, 2 or 3 wherein the preform is placed in the pool of the organic fluid, and the pool is in a vacuum chamber (24) such that the fluid boils or foams in said vacuum.

5. A method as in any preceding claims wherein an organic residue remains on the surfaces of the pores and the pyrolizing (34) of the preform converts the residue into a carbon film.

6. A method as in any preceding claim further comprising at least partially treating a fiber preform with a chemical vapor infiltration process (11) to produce the ceramic fiber composite preform, and subsequently infiltrating the pores.

7. A method as in any preceding claim wherein the preform (8) has a pore volume between 10 volume percent and 45 volume percent, before infiltration of the organic fluid.

8. A method as in any preceding claim wherein the organic fluid (18) is selected from a group consisting of one or more of liquid corn syrup, molasses, sugar solution and polyester.

9. A method as in any preceding claim wherein the preform (8) is a ceramic fiber composite.

10. A process as in any one of claims 1 to 8 1 wherein the ceramic preform is a ceramic polymer preform (8).
